# EUROPEAN PATENT APPLICATION

(11) **EP 4 436 267 A1**
(43) Date of publication of application: **25.09.2024**
(21) Application number: 22894830.3
(22) Date of filing: 16.11.2022
(51) Int. Cl.: H04W 52/02

(54) **SENSING SIGNAL DETECTION METHOD, SENSING SIGNAL DETECTION PROCESSING METHOD AND RELATED DEVICE**

(30) Priority: 19.11.2021 CN 202111402655
(71) Applicant: Vivo Mobile Communication Co., Ltd., Dongguan, Guangdong 523863 (CN)
(72) Inventor: JIANG, Dajie, Dongguan, Guangdong 523863 (CN); WANG, Pucong, Dongguan, Guangdong 523863 (CN)
(74) Representative: Lavoix
(86) International application number: PCT/CN2022/132239
(87) International publication number: WO 2023/088298

(57) **Abstract**

This application pertains to the field of communications technologies, and discloses a sensing signal detection method, a sensing signal detection processing method, and a related device. The sensing signal detection method in embodiments of this application includes: receiving, by a first device, first indication information from a second device, where the first indication information is used to determine a detection window; and detecting and measuring, by the first device, a target sensing signal based on the detection window.

## Description

### CROSS-REFERENCE TO RELATED APPLICATIONS

This application claims priority to Chinese Patent Application No. 202111402655.8, filed in China on November 19, 2021, which is incorporated herein by reference in its entirety.

### TECHNICAL FIELD

This application pertains to the field of communications technologies, and particularly relates to a sensing signal detection method, a sensing signal detection processing method, and a related device.

### BACKGROUND

With development of communications technologies, a future communications system also has a wireless sensing capability in addition to a communication capability. For example, in a discussion, it is proposed that a device can perform detection and measurement through active sensing, passive sensing, or interactive sensing to improve sensing performance. Considering that a plurality of types of sensing signals are detected or that sensing signals are detected on a plurality of resources, power consumption for sensing is high.

### SUMMARY

Embodiments of this application provide a sensing signal detection method, a sensing signal detection processing method, and a related device to resolve a problem of high power consumption for sensing.

According to a first aspect, a sensing signal detection method is provided, including:
receiving, by a first device, first indication information from a second device, where the first indication information is used to determine a detection window; and
detecting and measuring, by the first device, a target sensing signal based on the detection window.

According to a second aspect, a sensing signal detection processing method is provided, including:
sending, by a second device, first indication information to a first device, where the first indication information is used to determine a detection window for detecting and measuring a target sensing signal.

According to a third aspect, a sensing signal detection apparatus is provided, including:
a first receiving module, configured to receive first indication information from a second device, where the first indication information is used to determine a detection window; and
an execution module, configured to detect and measure a target sensing signal based on the detection window.

According to a fourth aspect, a sensing signal detection processing apparatus is provided, including:
a second sending module, configured to send first indication information to a first device, where the first indication information is used to determine a detection window for detecting and measuring a target sensing signal.

According to a fifth aspect, a terminal is provided. The terminal includes a processor, a memory, and a program or instructions stored in the memory and capable of running on the processor. When the program or instructions are executed by the processor, the steps of the method according to the first aspect are implemented, or the steps of the method according to the second aspect are implemented.

According to a sixth aspect, a terminal is provided, including a processor and a communication interface, where
the communication interface is configured to: receive first indication information from a second device, where the first indication information is used to determine a detection window; and detect and measure a target sensing signal based on the detection window; or
the communication interface is configured to send first indication information to a first device, where the first indication information is used to determine a detection window for detecting and measuring a target sensing signal.

According to a seventh aspect, a network-side device is provided. The network-side device includes a processor, a memory, and a program or instructions stored in the memory and capable of running on the processor. When the program or instructions are executed by the processor, the steps of the method according to the first aspect are implemented, or the steps of the method according to the second aspect are implemented.

According to an eighth aspect, a network-side device is provided, including a processor and a communication interface, where
the communication interface is configured to: receive first indication information from a second device, where the first indication information is used to determine a detection window; and detect and measure a target sensing signal based on the detection window; or
the communication interface is configured to send first indication information to a first device, where the first indication information is used to determine a detection window for detecting and measuring a target sensing signal.

According to a ninth aspect, a readable storage medium is provided. The readable storage medium stores a program or instructions. When the program or instructions are executed by a processor, the steps of the method according to the first aspect are implemented, or the steps of the method according to the second aspect are implemented.

According to a tenth aspect, an embodiment of this application provides a chip. The chip includes a processor and a communication interface. The communication interface is coupled to the processor. The processor is configured to run a program or instructions to implement the steps of the method according to the first aspect or implement the steps of the method according to the second aspect.

According to an eleventh aspect, a computer program product is provided. The computer program product is stored in a non-transitory storage medium. The computer program product is executed by at least one processor to implement the method according to the first aspect or implement the method according to the second aspect.

In the embodiments of this application, the first device receives the first indication information from the second device, where the first indication information is used to determine the detection window; and the first device detects and measures the target sensing signal based on the detection window. In this way, the first device can detect only the sensing signal located within the detection window, thereby reducing power consumption for sensing while meeting a sensing performance requirement for detection and measurement.

### BRIEF DESCRIPTION OF DRAWINGS

FIG. 1 is a structural diagram of a network system to which an embodiment of this application can be applied;
FIG. 2 is a first exemplary diagram of a sensing signal transmission scenario according to an embodiment of this application;
FIG. 3 is a second exemplary diagram of a sensing signal transmission scenario according to an embodiment of this application;
FIG. 4 is a flowchart of a sensing signal detection method according to an embodiment of this application;
FIG. 5 is a schematic diagram of detection and measurement in a sensing signal detection method according to an embodiment of this application;
FIG. 6 is a flowchart of a sensing signal detection processing method according to an embodiment of this application;
FIG. 7 is a structural diagram of a sensing signal detection apparatus according to an embodiment of this application;
FIG. 8 is a structural diagram of a sensing signal detection processing apparatus according to an embodiment of this application;
FIG. 9 is a structural diagram of a communication device according to an embodiment of this application;
FIG. 10 is a structural diagram of a terminal according to an embodiment of this application; and
FIG. 11 is a structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specified order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. In the following descriptions, a new radio (New Radio, NR) system is described for an illustrative purpose, and NR terms are used in most of the following descriptions. However, these technologies may also be applied to other applications than an NR system application, for example, a 6th Generation (6th Generation, 6G) communications system.

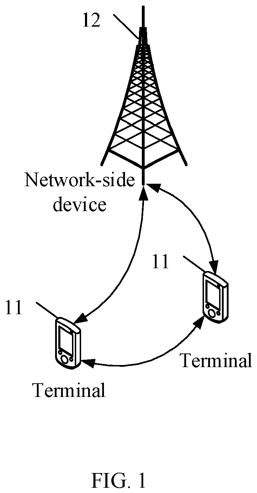

FIG. 1 is a block diagram of a wireless communications system to which an embodiment of this application may be applied. The wireless communications system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (Vehicle User Equipment, VUE), pedestrian user equipment (Pedestrian User Equipment, PUE), or a smart home (a home device having a wireless communication function, such as a refrigerator, a television, a washing machine, or furniture). The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, a game console, or the like. It should be noted that a specific type of the terminal 11 is not limited in the embodiments of this application. The network-side device 12 may be a base station or a core network device. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Network, WLAN) access point, a Wireless Fidelity (Wireless Fidelity, Wi-Fi) node, a transmission and reception point (Transmitting Receiving Point, TRP), or another appropriate term in the art, as long as the same technical effect is achieved. The base station is not limited to specific technical terms. It should be noted that in the embodiments of this application, only a base station in an NR system is used as an example, but a specific type of the base station is not limited.

For ease of understanding, the following describes some content in the embodiments of this application.

### I. Integrated communication and sensing

A future mobile communications system such as a beyond fifth generation (Beyond 6th generation, B5G) B5G system or a sixth generation (6th generation, 6G) system also has a sensing capability in addition to a communication capability. By sending and receiving radio signals, one or more devices having a sensing capability can sense an orientation, a distance, a speed, and other information of a target object, or detect, track, identify, and image a target object, an event, an environment, or the like. In the future, as millimeter-wave, terahertz, and other small devices A having high frequency bands and large bandwidths are deployed in a 6G network, sensing resolutions are significantly improved over those of centimeter-wave devices. Therefore, the 6G network can provide more refined sensing services.

Optionally, depending on purposes, sensing mainly falls into two categories. The first category is sensing used to assist communication or enhance communication performance. For example, a device A provides more accurate beamforming and beam alignment by tracking a moving track of a device. The other category is sensing not directly related to communication. For example, the device A monitors weather conditions by using radio signals, and a mobile phone recognizes a gesture of a user through millimeter-wave wireless sensing.

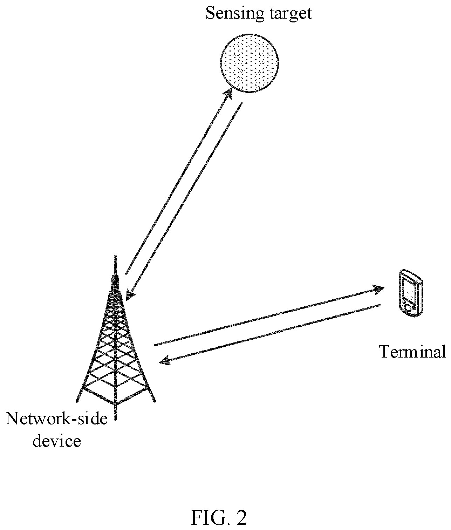

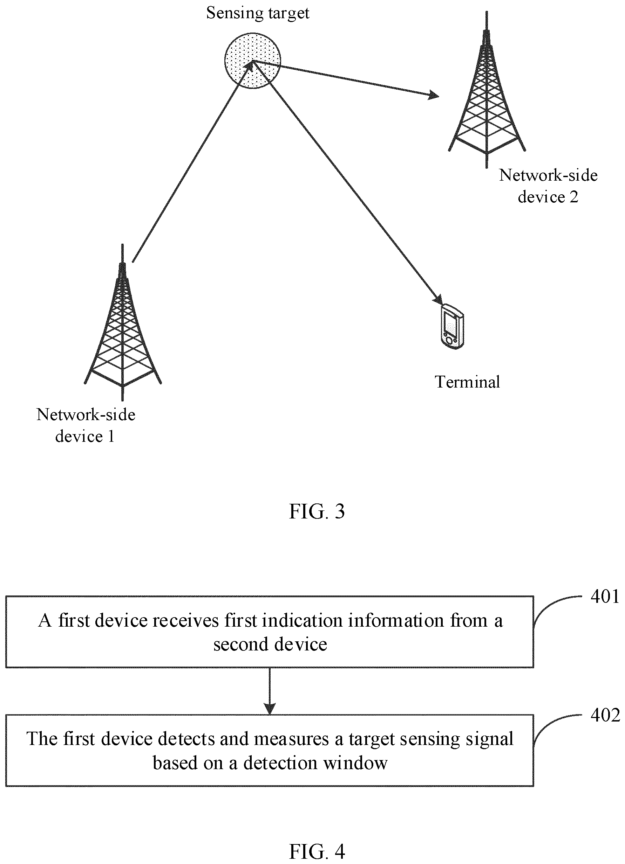

The following sensing modes may be available:
1. Active sensing: As shown in FIG. 2, a device performs sensing by using a reflected signal such as an echo of a signal transmitted by the device. A transmitter and a receiver are at a same location, and can use different antennas to sense environment information around the device.
2. Passive sensing: As shown in FIG. 3, a transmitter and a receiver are at different locations, and the receiver performs sensing by using a radio signal transmitted by the transmitter. For example, a device A senses environment information between the device A and a device B by receiving a radio signal from the device B.
3. Interactive sensing: Through information exchange, a sensing entity and a target object agree on an electromagnetic wave sender, and a sending time, frequency, format, and the like, to complete a process of sensing.

An integrated design of communication and sensing is feasible in the following four aspects:
First, both a communications system and a sensing system are based on an electromagnetic wave theory, and use emission and reception of electromagnetic waves to complete acquisition and transmission of information.

Both the communications system and the sensing system have structures such as antennas, transmitters, receivers, and signal processors, and their hardware resources largely overlap.

With development of technologies, the two systems also have more overlaps in their operating bands.

There are similarities in key technologies such as signal modulation and reception/detection, and a waveform design.

An air interface design of a B5G system or a 6G system supports both wireless communication signals and wireless sensing signals. Based on integrated means of communication and sensing such as a joint signal design and/or hardware sharing, an integrated design of communication and sensing functions can be implemented. The system has a sensing capability or provides a sensing service while performing information transmission.

Integration of communication and sensing brings the following benefits:
costs are reduced;
a device size is reduced;
device power consumption is reduced;
spectral efficiency is improved; and
interference between communication and sensing is reduced, and system performance is improved.

Optionally, integration of communication and sensing brings the following benefits: the costs are reduced; the device size is reduced; device power consumption is reduced; spectral efficiency is improved; and interference between communication and sensing is reduced, and system performance is improved.

Optionally, a scope of integration of communication and sensing is not clearly defined. In a broad sense, the integration of communication and sensing includes the following types:

A same network provides communication services and sensing services;
a same terminal provides communication services and sensing services;
a same spectrum provides communication services and sensing services; and
an integrated communication and sensing service, that is, a joint design of a communication signal and a sensing signal, is completed in same radio transmission.

### II. Reference signals (Reference Signal, RS) in 5G NR

The RSs in 5G NR mainly include the following types of reference signals:
1. Downlink (downlink, DL) RSs, including a physical downlink shared channel (Physical downlink shared channel, PDSCH) demodulation reference signal (Demodulation Reference Signal, DMRS), a physical downlink control channel (Physical downlink control channel, PDCCH) DMRS, a physical broadcast channel (Physical broadcast channel, PBCH) DMRS, a phase-tracking reference signal (Phase-tracking reference signal, PTRS), a channel state information reference signal (Channel State Information Reference Signal, CSI-RS), a remote interference management reference signal (Remote Interference Management Reference Signal, RIM-RS), and a positioning reference signal (Positioning Reference Signal, PRS).
2. Uplink (Uplink, UL) RSs, including a physical uplink shared channel (Physical Uplink Shared Channel, PUSCH) DMRS, a physical uplink control channel (Physical Uplink Control Channel, PUCCH) DMRS, a PTRS, and a sounding reference signal (Sounding Reference Signal, SRS).
3. Sidelink (Sidelink, SL) RSs, including a physical sidelink shared channel (Physical Sidelink shared channel, PSSCH) DMRS, a physical sidelink control channel (Physical Sidelink control channel, PSCCH) DMRS, a PSSCH-PTRS, a physical Sidelink broadcast channel (Physical Sidelink broadcast channel, PBCH) DMRS, and a CSI-RS.

A sensing signal detection method provided in the embodiments of this application is hereinafter described in detail by using some embodiments and application scenarios thereof with reference to the accompanying drawings.

FIG. 4 is a flowchart of a sensing signal detection method according to an embodiment of this application. As shown in FIG. 4, the method includes the following steps.

Step 401: A first device receives first indication information from a second device, where the first indication information is used to determine a detection window.

In this embodiment of this application, the first indication information may be carried by using layer 1 signaling. It should be understood that the indication information may also be referred to as signaling. The detection window may be one or more windows. When there are a plurality of windows, the windows may be periodic detection windows or aperiodic detection windows. This is not further limited herein.

Step 402: The first device detects and measures a target sensing signal based on the detection window.

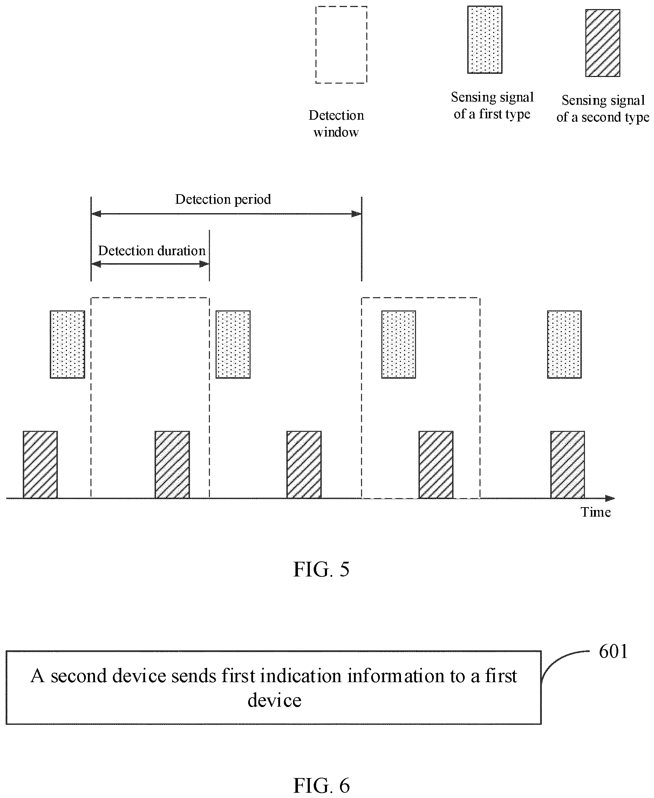

In this embodiment of this application, the first device can perform detection and measurement within the detection window, that is, detect or receive at least part of sensing signals located within the detection window. As shown in FIG. 5, it is assumed that there are two types of sensing signals. In a previous detection window, detection and measurement are performed only on a sensing signal of the second type within the detection window. In a subsequent detection window, detection and measurement can be performed on a sensing signal of the first type and a sensing signal of the second type within the detection window. The sensing signal located within the detection window may be understood as a sensing signal whose time domain resource is located within the detection window. Optionally, in some embodiments, the detection window may also be understood as a detection window used for shielding detection, that is, detection and measurement of sensing signals located outside the detection window.

Optionally, the target sensing signal is a signal used to sense an object. Specifically, the target sensing signal may be a signal reflected back from a target object for a signal. For example, the target sensing signal may include at least one of the following: a reference signal in LTE, a reference signal in NR, a reference signal in a new generation mobile communications system, a sensing signal in the new generation mobile communications system, a reference signal in the Narrowband Internet of Things (Narrow Band Internet of Things, NB-IoT) or enhanced machine type communication (Enhanced machine type communication, EMTC), a reference signal in Wi-Fi, and a preamble (preamble).

It should be noted that a device sending the target sensing signal (which may also be referred to as a transmit end) may include one or more devices. In this embodiment of this application, the second device may be the device sending the target sensing signal, or may not be the device sending the target sensing signal. In other words, target sensing signals that the first device can receive may include sensing signals sent by one or more second devices, or may include sensing signals sent by one or more other devices. The first device may be understood as a device or a receive end that receives the target sensing signal. The device receiving the target sensing signal may include one or more devices.

For a plurality of types of sensing signals, different periods and detection offsets (offset) may be configured, but some actual sensing demands are to detect sensing signals based on a preset period, where the preset period may be inconsistent with the periods of the plurality of types of sensing signals. Therefore, setting the detection window can reduce a power loss in detection and measurement and also meet sensing performance requirements.

In this embodiment of this application, the first device receives the first indication information from the second device, where the first indication information is used to determine the detection window; and the first device detects and measures the target sensing signal based on the detection window. In this way, the first device can detect only the sensing signal located within the detection window, thereby reducing power consumption for sensing while meeting a sensing performance requirement for detection and measurement.

Optionally, in some embodiments, the method further includes:
the first device receives second indication information from the second device, where the second indication information is used to indicate the target sensing signal, the target sensing signal includes N types of sensing signals, and N is a positive integer.

In this embodiment of this application, the second indication information may be carried in layer 1 signaling, where the first indication information and the second indication information may be located in the same signaling or different signaling. If the first indication information and the second indication information are located in the same signaling, it means that one piece of signaling carries the first indication information and the second indication information.

Optionally, in a case that N is 1, the target sensing signal includes at least two resources.

Optionally, in this embodiment of this application, the second indication information may be specifically used to indicate at least one of the following:
at least two resources for a type of sensing signal; and
at least one type of sensing signal.

When the second indication information indicates at least two resources for a type of sensing signal, this type of sensing signal is received only on resources located within the detection window, among the resources indicated by the second indication information. In this case, the indicated at least two resources may be at least part of the at least two resources preconfigured for this type of sensing signal. When the second indication information indicates a type of sensing signal, this type of sensing signal may be received on resources located within the detection window, among all resources preconfigured for this type of sensing signal.

Optionally, in some embodiments, before the first device receives the first indication information from the second device, the method further includes:
the first device receives third indication information from the second device, where the third indication information is used to indicate configuration information of at least one type of sensing signal or configuration information of at least one resource for a type of sensing signal.

It may be understood that the third indication information in this embodiment of this application is carried in radio resource control (Radio Resource Control, RRC) signaling. For example, each piece of third indication information is carried in one piece of RRC signaling. There may be one or more pieces of third indication information, and each piece of third indication information may indicate configuration information of at least one type of sensing signal or configuration information of one or more resources for a type of sensing signal, as detailed in Table 1. The configuration information may include the type of sensing signal (such as a CSI-RS or a PTRS), time-frequency domain resources, a quantity of ports, and the like.

**Table 1**

| Index of signaling | Type of reference signal | Time domain resource | Frequency domain resource | Other information |
|---|---|---|---|---|
| 1 | CSI-RS | First time domain resource (including a period and a time domain offset) | First frequency domain resource | |
| 2 | CSI-RS | Second time domain resource (including a period and a time domain offset) | Second frequency domain resource | |
| 3 | PTRS | Third time domain resource (including a period and a time domain offset) | Third frequency domain resource | |
| 4 | PSS | - | - | |
| 5 | ... | ... | ... | |

Optionally, in some embodiments, the target sensing signal is at least part of sensing signals associated with the third indication information. In other words, in this embodiment of this application, the target sensing signal sent or received is a subset or a whole set of sensing signals configured by the third indication information.

Optionally, in some embodiments, the method further includes:
the first device receives fourth indication information from the second device, where the fourth indication information is used to indicate at least one of the following:
a power difference between sensing signals with different indexes;
a power difference between sensing signals on different resources; and
a quasi-co-location (Quasi co-location, QCL) relationship between sensing signals.

In this embodiment of this application, the fourth indication information may be carried in the signaling corresponding to the first indication information, the second indication information, or the third indication information.

For a power difference between sensing signals of different types or sensing signals on different resources, in some embodiments, an energy per resource element (Energy per resource element, EPRE) ratio between the target sensing signal and a primary reference signal may be indicated. The primary reference signal may be prescribed in a protocol or configured by the second device.

Optionally, in some embodiments, the first indication information is used to indicate at least one of the following: a detection period, a detection offset (offset), and detection duration.

In this embodiment of this application, the detection window may be understood as a periodic detection window. Assuming that the detection offset is 0, the corresponding detection window is shown in FIG. 5. Usually, the detection window needs to be determined based on three parameters: the detection period, the detection offset, and the detection duration. If a parameter defaults in the first indication information, it may be understood that a parameter value of the default parameter is a preconfigured value or a value prescribed in a protocol.

Optionally, assuming that the detection period is 10 slots (slot), and that the detection offset is 0 slots, and that the detection duration is 1 slot, the first device detects the target sensing signal in a first slot (also referred to as a target slot) in every 10 slots. There are the following cases.
Case 1: There is an index of one target sensing signal in the target slot. In this case, the first device detects the sensing signal corresponding to the index.
Case 2: There are a plurality of indexes of target sensing signals in the target slot. In this case, the UE detects the sensing signals corresponding to the plurality of indexes or selects to detect a sensing signal corresponding to one index.
Case 3: There is no index of any target sensing signal in the target slot. In this case, the UE does not detect any sensing signal.

Optionally, in some embodiments, after the first device detects and measures the target sensing signal based on the detection window, the method further includes:
the first device reports measurement information of a target detection and measurement quantity, where the target detection and measurement quantity includes at least one of the following detection and measurement quantities: a channel matrix, channel state information, reference signal received power (Reference Signal Received Power, RSRP), a received signal strength indicator (Received Signal Strength Indication, RSSI), a channel power delay profile (power delay profile, PDP), a Doppler power spectrum, Doppler spread, a coherence bandwidth, a coherence time, power of at least one path in a multipath channel, a delay of the at least one path in the multipath channel, an angle of the at least one path in the multipath channel, a Doppler frequency shift, a quotient of frequency domain channel responses of a first antenna and a second antenna, a conjugate product of the frequency domain channel responses of the first antenna and the second antenna, an amplitude ratio of received signals of the first antenna and the second antenna, an amplitude difference between the received signals of the first antenna and the second antenna, a phase difference between the first antenna and the second antenna, and angle-related information of the first antenna and the second antenna, where
the first antenna and the second antenna are receive antennas of the first device.

Optionally, in this embodiment of this application, the at least one path includes at least a first-arrival path, a line of sight (Line of Sight, LOS) path, a first-order reflection path, and a multi-order reflection path. In some embodiments, the at least one path in the multipath channel may be replaced with each path in the multipath channel. In other words, the target detection and measurement quantity may include at least one of power of each path in the multipath channel, a delay of each path in the multipath channel, and an angle of each path in the multipath channel.

Optionally, the channel state information may include at least one of an amplitude of a frequency domain channel response, a phase of the frequency domain channel response, and inphase and quadrature signal features of the frequency domain channel response. The inphase and quadrature signal features may include inphase and quadrature signal amplitudes.

Optionally, the angle-related information may include an angle of arrival and an angle of departure, and may specifically include terminal-side angle information, network-side angle information, and reflection point angle information.

It should be understood that a specific definition of the detection and measurement quantity may be specified in a protocol. Detection and measurement quantities corresponding to different sensing signals may be the same or different.

Optionally, in some embodiments, the method further includes:
the first device receives, from the second device, feedback configuration information corresponding to the target detection and measurement quantity, where
the feedback configuration information includes at least one of the following:
   a time domain resource for reporting the target detection and measurement quantity;
   a frequency domain resource for reporting the target detection and measurement quantity; and
   a granularity or step for reporting the target detection and measurement quantity.

Optionally, in some embodiments, the first device reports measurement information of a target detection and measurement quantity:
the first device reports the measurement information of the target detection and measurement quantity to a target device, where the target device is the second device or a third device associated with the second device.

In this embodiment of this application, the third device may be a core network, a sensing network element in a core network, or a sensing network function in a core network.

Optionally, in a case that the target device is the second device, after receiving the measurement information of the target detection and measurement quantity, the second device may convert the measurement information of the target detection and measurement quantity into a sensing result (that is, it may be understood that the detection and measurement quantity is converted into the sensing result or that the measurement information of the detection and measurement quantity is converted into the sensing result) and send the sensing result to a sensing demander; or the second device forwards the received measurement information of the target detection and measurement quantity to the third device, and the third device converts the measurement information of the target detection and measurement quantity into a sensing result and sends the sensing result to the sensing demander. In a case that the target device is the third device, after receiving the measurement information of the target detection and measurement quantity, the third device may convert the measurement information of the target detection and measurement quantity into a sensing result and send the sensing result to the sensing demander; or the third device forwards the received measurement information of the target detection and measurement quantity to the second device, and the second device converts the measurement information of the target detection and measurement quantity into a sensing result and sends the sensing result to the sensing demander. The sensing demander may be understood as a device requests the detection and measurement or triggers the detection and measurement, and may be the sensing signal transmit end, the sensing signal receive end, or another device. This is not further limited herein.

Further, the sensing demander may send a sensing demand to the third device, and the third device sends the sensing demand or target information to the second device. The target information includes at least one of a sensing signal configuration corresponding to the sensing demand and a detection and measurement quantity that the first device needs to measure.

Optionally, in some embodiments, the measurement information of the target detection and measurement quantity includes at least one of the following:
first measurement information corresponding to at least one first detection and measurement quantity, where the first detection and measurement quantity is a detection and measurement quantity among the target detection and measurement quantities, and first measurement information corresponding to each first detection and measurement quantity includes at least one of the following: index values of M sensing signals, where the M sensing signals are all sensing signals corresponding to the first detection and measurement quantity, and M is an integer greater than 1; and a measurement value of a sensing signal corresponding to each index value; and
second measurement information corresponding to at least one second detection and measurement quantity, where the second detection and measurement quantity is a detection and measurement quantity among the target detection and measurement quantities, and second measurement information corresponding to each second detection and measurement quantity is associated with all sensing signals corresponding to the second detection and measurement quantity.

In this embodiment of this application, a rule for reporting the first detection and measurement quantity may be understood as: separately reporting values of different detection and measurement quantities corresponding to reference signals with different indexes, and the index values of the corresponding sensing signals. A rule for reporting the second detection and measurement quantity may be understood as: jointly reporting values of one detection and measurement quantity corresponding to sensing signals with different indexes. It should be understood that a method for combining detection and measurement quantities corresponding to sensing signals with different indexes may be set based on an actual requirement. For example, in some embodiments, the second measurement information corresponding to the second detection and measurement quantity may be obtained based on any one of the following methods:
1. Different sensing signals are detected separately, and the detection and measurement quantities are averaged or a detection and measurement quantity corresponding to one of the sensing signals is selected. A selection criterion may be that a sensing signal to interference plus noise ratio (signal-to-noise and interference ratio, SINR) meets a threshold or is a best sensing SINR, where the threshold is notified by the second device to the first device in advance.
2. Joint signal processing is performed on a plurality of sensing signals to obtain a detection and measurement quantity. For example, in radar signal processing, a joint matched filter is designed for a plurality of sensing signals, and a detection and measurement quantity is obtained. A greater signal processing gain can be obtained by using this method.
3. For a plurality of sensing signals, different detection and measurement quantities are detected separately. For example, ranging (a ranging range is large) may be performed on DMRSs with relatively high density in frequency, and speed measurement may be performed on PTRSs with high density in time (a range of speed measurement is large).

It should be understood that if the first measurement information includes only the index values of the M sensing signals, measurement values of the sensing signals corresponding to the reported index values meet a preset requirement, for example, are greater than or equal to a preset value or less than or equal to a preset value.

Optionally, in some embodiments, the method further includes:
in a case that the detection window at least partially overlaps a resource corresponding to a preset signal or a preset event in time domain, the first device cancels the detection and measurement of the sensing signal within the detection window.

In this embodiment of this application, "the detection window at least partially overlaps a resource corresponding to a preset signal or a preset event in time domain" may be understood as "a time domain resource corresponding to the preset signal or the preset event is at least partially located in the detection window". The preset signal or the preset event may include at least one of the following: an uplink slot, an uplink symbol, a guard period (Guard Period, GP) in a time division duplex (Time Division Duplex, TDD) system, a random access response (Random Access Response, RAR) of message 2 (Msg 2), a measurement gap (Measurement Gap) in NR, a synchronization signal block (Synchronization Signal and PBCH block, SSB), and the like.

Optionally, in some embodiments, the method further includes:
the first device sends assistance information to the second device, where
in a case that the first device detects and measures the target sensing signal, the assistance information is used to indicate at least one of a type, a resource, and configuration information of the sensing signal that the second device is expected to send; or
in a case that the first device sends the target sensing signal, the assistance information is used to indicate at least one of a type, a resource, and configuration information of the sensing signal that the first device is expected to send.

In this embodiment of this application, assuming that the sensing demander is the first device (such as a terminal), the first device knows, better than the second device, configuration information of a sensing signal associated with the sensing demand. In this case, the first device sends the assistance information to a base station, that is, the first device recommends, to the second device, configuration information of a reference signal corresponding to the sensing demand. This can improve sensing accuracy or sensing performance and better meet the sensing demand.

Optionally, in some embodiments, the method further includes:
the first device reports capability information to a target device, where the capability information is used to indicate at least one of the following:
types of sensing signals on which the first device can perform detection and measurement simultaneously;
a quantity of sensing signals on which the first device can perform detection and measurement simultaneously;
a quantity of resources on which the first device can perform detection and measurement simultaneously; and
parameter information based on which the first device can perform detection and measurement simultaneously.

The target device is the second device or the third device associated with the second device.

For better understanding of this application, details are hereinafter described by using some specific embodiments.

Embodiment 1: In scenario 1, UE (that is, a first device) detects a plurality of downlink reference signals, SL reference signals, or synchronization signals based on indications of first signaling and second signaling sent by a base station (a second device). In scenario 2, a first base station (that is, a first device) detects a plurality of downlink reference signals or synchronization signals based on indications of first signaling and second signaling sent by a second base station (that is, a second device).

Scenario 1 is used as an example for description. Specifically, the procedure includes the following step.

UE receives first signaling sent by a base station, where the first signaling indicates a sensing-related detection period, a detection offset, and detection duration to the UE. The three parameters determine a plurality of detection windows, specifically as shown in FIG. 5.

Optionally, the UE receives second signaling (such as layer 1 signaling) sent by the base station, where the second signaling indicates either of the following:
a plurality of resources for a sensing signal on which the UE needs to perform detection and measurement, where each resource includes one or more ports (port), such as two resources for a CSI-RS, and each resource includes four ports; and
a plurality of sensing signals on which the UE needs to perform detection and measurement, where each sensing signal includes one or more resources, for example, a PTRS resource with a period of 20 ms and a PRS resource with a period of 20 ms.

The sensing signals include at least two signals in LTE: a DL reference signal and an SL reference signal; or at least two signals in NR: a DL reference signal and an SL reference signal; or reference signals or sensing signals in a new generation mobile communications system (for example, a reference signal and a sensing signal in 6G); or reference signals in different systems (for example, a reference signal in NR and a sensing signal in 6G; or for another example, a CSI-RS in 5G and a CRS in 4G); reference signals in the NB-IoT; reference signals in EMTC, and the like; and various reference signals in Wi-Fi, a preamble, and the like.

Optionally, the sensing signals may be sent by different access points (Access Point, AP), different base stations, or different TRPs.

Optionally, the first signaling and the second signaling may be the same signaling.

Optionally, the UE may further receive (one or more pieces of) third signaling sent by the base station, where a piece of third signaling may indicate configuration information of at least one type of sensing signal, or may indicate configuration information of one or more resources for a type of sensing signal; the configuration information includes the type of sensing signal (such as a CSI-RS or a PTRS), time-frequency domain resources, a quantity of ports, and the like; and the sensing signal is a downlink reference signal or a sidelink reference signal.

Optionally, the first signaling, the second signaling, or the third signaling further indicates at least one of the following:
a power difference between target sensing signals of a same type or target sensing signals of different resources, for example, an EPRE ratio between a target sensing signal and a primary reference signal, where the primary reference signal is defined in a protocol or configured by a base station; and
a QCL relationship between target sensing signals.

Note on quasi-co-location: If a channel feature on a symbol of an antenna port can be derived from another antenna port, it is considered that the two ports are QCL, and a channel estimation result obtained from one port can be used for the other port. For example, it may be considered that the two ports come from a same transmission source. A QCL configuration may include a plurality of different signal types, such as a CSI-RS, an SSB, or an SRS. A network-side device may configure corresponding QCL configurations for different beams. By changing a QCL configuration of a terminal, the network-side device may change a beam on which the terminal works.

There are four types of QCL in a 5G system, specifically as shown in Table 2.

**Table 2**

| Type | Feature | Purpose |
|---|---|---|
| QCL-TypeA | Doppler shift, Doppler spread, average delay, and delay spread | To obtain channel estimation information |
| QCL-TypeB | Doppler shift and Doppler spread | To obtain channel estimation information |
| QCL-TypeC | Doppler shift and average delay | To obtain measurement information such as RSRP |
| QCL-TypeD | Spatial receive (Rx receive) parameter | To assist the terminal in beamforming |

Optionally, based on the received first signaling, the UE detects a target sensing signal indicated by the second signaling to obtain a corresponding detection and measurement quantity, specifically as follows:

The UE determines each detection window based on the three parameters of the detection period, the detection offset, and the detection duration indicated by the received first signaling, specifically as shown in FIG. 5.

Optionally, the UE detects, within each detection window, the target sensing signal indicated by the second signaling. For example, if the detection period is 10 slots (slot), and the detection offset is 0 slots, and the detection duration is 1 slot, the first device detects the target sensing signal in a first slot (also referred to as a target slot) in every 10 slots. There are the following cases.
Case 1: There is an index of one target sensing signal in the target slot. In this case, the first device detects the sensing signal corresponding to the index.
Case 2: There are a plurality of indexes of target sensing signals in the target slot. In this case, the UE detects the sensing signals corresponding to the plurality of indexes or selects to detect a sensing signal corresponding to one index.
Case 3: There is no index of any target sensing signal in the target slot. In this case, the UE does not detect any sensing signal.

It should be understood that the sensing signal may be sent by the second device or another device.

Optionally, the UE detects, based on the received first signaling, the target sensing signal indicated by the second signaling; and before obtaining the corresponding detection and measurement quantity, the UE may receive a target detection and measurement quantity that the UE needs to report and that is notified by the base station.

The target detection and measurement quantity includes at least one of the following detection and measurement quantities: a channel matrix, channel state information, reference signal received power, a received signal strength indicator, a channel power delay profile, a Doppler power spectrum, Doppler spread, a coherence bandwidth, a coherence time, power of each path in a multipath channel, a delay of each path in the multipath channel, an angle of each path in the multipath channel, a Doppler frequency shift, a quotient of frequency domain channel responses of a first antenna and a second antenna, a conjugate product of the frequency domain channel responses of the first antenna and the second antenna, an amplitude ratio of received signals of the first antenna and the second antenna, an amplitude difference between the received signals of the first antenna and the second antenna, a phase difference between the first antenna and the second antenna, and angle-related information of the first antenna and the second antenna, where
the first antenna and the second antenna are receive antennas of the first device.

Measurement information of the detection and measurement quantity may alternatively be a measurement quantity obtained after simple operations are performed on at least one of the foregoing items or a measurement quantity obtained after complex operations are performed on at least one of the foregoing items. The simple operations may include addition, subtraction, multiplication, division, matrix addition, matrix subtraction, matrix multiplication, matrix transposition, a trigonometric relationship operation, a square root operation, a power operation, and the like, as well as threshold detection, maximum/minimum value extraction of the foregoing operation results, and the like. The complex operations include fast Fourier transform (Fast Fourier Transform, FFT) or inverse fast Fourier transform (Inverse Fast Fourier Transform, IFFT), discrete Fourier transform (Discrete Fourier Transform, DFT) or inverse discrete Fourier transform (Inverse Discrete Fourier Transform, IDFT), two-dimensional fast Fourier transform (two-Dimensional Fast Fourier Transform, 2D-FFT), three-dimensional fast Fourier transform (3D-FFT), matched filtering, an autocorrelation operation, wavelet transform, digital filtering, and the like, as well as threshold detection, maximum/minimum value extraction of the foregoing operation results, and the like.

Optionally, a specific definition of the detection and measurement quantity may be specified in a protocol. Detection and measurement quantities corresponding to different sensing signals may be the same or different.

Optionally, before the UE detects, based on the received first signaling, the target sensing signal indicated by the second signaling to obtain the corresponding detection and measurement quantity, the UE may receive feedback configuration information corresponding to the detection and measurement quantity and indicated by the base station by using the first signaling or other signaling, where the feedback configuration information includes at least one of the following:
a time domain resource for reporting the target detection and measurement quantity;
a frequency domain resource for reporting the target detection and measurement quantity; and
a granularity or step for reporting the target detection and measurement quantity.

Optionally, the UE reports a value of the detection and measurement quantity to the second device or a third device. The third device may be a sensing network element or a sensing network function in a core network.

A feedback rule may include at least one of the following:
separately reporting values of different detection and measurement quantities corresponding to sensing signals with different indexes, and corresponding sensing signal indexes; and
jointly reporting values of one detection and measurement quantity corresponding to sensing signals with different indexes.

Optionally, the second device converts the detection and measurement quantity into a sensing result; or the second device reports the detection and measurement quantity to the third device, and the third device converts the detection and measurement quantity into a sensing result.

Optionally, the second device or the third device sends the sensing result to a sensing demander.

Optionally, before the UE receives the first signaling sent by the base station, the sensing demander sends a sensing demand to the third device; and the third device sends the sensing demand or target information to the second device, where the target information includes at least one of a sensing signal configuration corresponding to the sensing demand and the detection and measurement quantity that the first device needs to measure.

Optionally, a method for resolving a collision between the detection window and other important reference signals includes:
if the detection window overlaps or partially overlaps a preset signal or a preset event, canceling detection of the sensing signal within the detection window, where the preset signal or the preset event includes at least one of the following: an uplink slot, an uplink symbol, a GP in a TDD system, an Msg 2 - RAR, a measurement gap in NR, an SSB, and the like.

FIG. 6 is a flowchart of a sensing signal detection processing method according to an embodiment of this application. As shown in FIG. 6, the method includes the following step.

Step 601: A second device sends first indication information to a first device, where the first indication information is used to determine a detection window for detecting and measuring a target sensing signal.

Optionally, the method further includes:
the second device sends second indication information to the first device, where the second indication information is used to indicate the target sensing signal, where
the target sensing signal includes N types of sensing signals, and N is a positive integer.

Optionally, before the second device sends the first indication information to the first device, the method further includes:
the second device sends third indication information to the first device, where the third indication information is used to indicate configuration information of at least one type of sensing signal or configuration information of at least one resource for a type of sensing signal.

Optionally, the method further includes:
the second device sends fourth indication information to the first device, where the fourth indication information is used to indicate at least one of the following:
a power difference between sensing signals with different indexes;
a power difference between sensing signals on different resources; and
a quasi-co-location QCL relationship between sensing signals.

Optionally, the first indication information is used to indicate at least one of the following: a detection period, a detection offset, and detection duration.

Optionally, after the second device sends the first indication information to the first device, the method further includes:
the second device receives measurement information of a target detection and measurement quantity, where the target detection and measurement quantity includes at least one of the following detection and measurement quantities: a channel matrix, channel state information, reference signal received power, a received signal strength indicator, a channel power delay profile, a Doppler power spectrum, Doppler spread, a coherence bandwidth, a coherence time, power of at least one path in a multipath channel, a delay of the at least one path in the multipath channel, an angle of the at least one path in the multipath channel, a Doppler frequency shift, a quotient of frequency domain channel responses of a first antenna and a second antenna, a conjugate product of the frequency domain channel responses of the first antenna and the second antenna, an amplitude ratio of received signals of the first antenna and the second antenna, an amplitude difference between the received signals of the first antenna and the second antenna, a phase difference between the first antenna and the second antenna, and angle-related information of the first antenna and the second antenna, where
the first antenna and the second antenna are receive antennas of the first device.

Optionally, the method further includes:
the second device sends, to the first device, feedback configuration information corresponding to the target detection and measurement quantity, where
the feedback configuration information includes at least one of the following:
   a time domain resource for reporting the target detection and measurement quantity;
   a frequency domain resource for reporting the target detection and measurement quantity; and
   a granularity or step for reporting the target detection and measurement quantity.

Optionally, the measurement information of the target detection and measurement quantity includes at least one of the following:
first measurement information corresponding to at least one first detection and measurement quantity, where the first detection and measurement quantity is a detection and measurement quantity among the target detection and measurement quantities, and first measurement information corresponding to each first detection and measurement quantity includes at least one of the following: index values of M sensing signals, where the M sensing signals are all sensing signals corresponding to the first detection and measurement quantity, and M is an integer greater than 1; and a measurement value of a sensing signal corresponding to each index value; and
second measurement information corresponding to at least one second detection and measurement quantity, where the second detection and measurement quantity is a detection and measurement quantity among the target detection and measurement quantities, and second measurement information corresponding to each second detection and measurement quantity is associated with all sensing signals corresponding to the second detection and measurement quantity.

Optionally, after the second device receives the measurement information of the target detection and measurement quantity, the method further includes:
the second device forwards the measurement information of the target detection and measurement quantity to a third device associated with the second device.

Optionally, the method further includes:
the second device receives assistance information from the first device, where the assistance information is used to indicate target information, and the target information includes at least one of the following: an expected detection period, an expected detection offset, and expected detection duration.

Optionally, the method further includes:
the second device receives capability information from the first device, where the capability information is used to indicate at least one of the following:
detection periods and detection duration of different sensing signals;
detection periods and detection duration of different detection and measurement quantities corresponding to different sensing signals; and
detection periods and detection duration of different detection and measurement quantities corresponding to different sensing signals at different frequencies.

It should be noted that this embodiment is used as an implementation of the second device corresponding to the embodiment shown in FIG. 2. For a specific implementation of this embodiment, reference may be made to the related descriptions of the embodiment shown in FIG. 2, and a same beneficial effect is achieved. To avoid repetition, details are not described herein again.

It should be noted that the sensing signal detection method provided in the embodiments of this application may be performed by a sensing signal detection apparatus, or a control module configured to perform the sensing signal detection method in the sensing signal detection apparatus. A sensing signal detection apparatus provided in the embodiments of this application is described by assuming that the sensing signal detection method in the embodiments of this application is performed by the sensing signal detection apparatus.

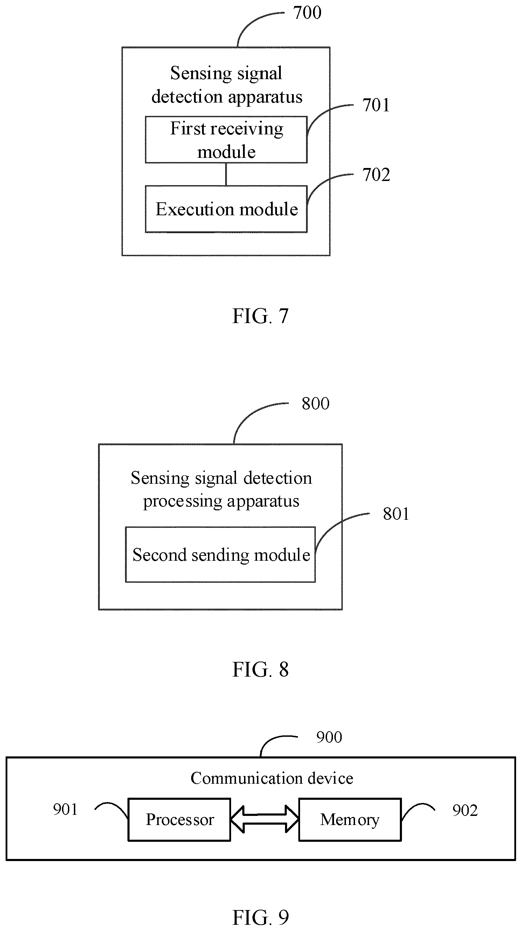

FIG. 7 is a structural diagram of a sensing signal detection apparatus according to an embodiment of this application. As shown in FIG. 7, the sensing signal detection apparatus 700 includes:
a first receiving module 701, configured to receive first indication information from a second device, where the first indication information is used to determine a detection window; and
an execution module 702, configured to detect and measure a target sensing signal based on the detection window.

Optionally, the first receiving module 701 is further configured to receive second indication information from the second device, where the second indication information is used to indicate the target sensing signal, where
the target sensing signal includes N types of sensing signals, and N is a positive integer.

Optionally, the first receiving module 701 is further configured to receive third indication information from the second device, where the third indication information is used to indicate configuration information of at least one type of sensing signal or configuration information of at least one resource for a type of sensing signal.

Optionally, the first receiving module 701 is further configured to receive fourth indication information from the second device, where the fourth indication information is used to indicate at least one of the following:
a power difference between sensing signals with different indexes;
a power difference between sensing signals on different resources; and
a quasi-co-location QCL relationship between sensing signals.

Optionally, the first indication information is used to indicate at least one of the following: a detection period, a detection offset, and detection duration.

Optionally, the sensing signal detection apparatus 700 further includes:
a first sending module, configured to report measurement information of a target detection and measurement quantity, where the target detection and measurement quantity includes at least one of the following detection and measurement quantities: a channel matrix, channel state information, reference signal received power, a received signal strength indicator, a channel power delay profile, a Doppler power spectrum, Doppler spread, a coherence bandwidth, a coherence time, power of at least one path in a multipath channel, a delay of the at least one path in the multipath channel, an angle of the at least one path in the multipath channel, a Doppler frequency shift, a quotient of frequency domain channel responses of a first antenna and a second antenna, a conjugate product of the frequency domain channel responses of the first antenna and the second antenna, an amplitude ratio of received signals of the first antenna and the second antenna, an amplitude difference between the received signals of the first antenna and the second antenna, a phase difference between the first antenna and the second antenna, and angle-related information of the first antenna and the second antenna, where
the first antenna and the second antenna are receive antennas at a receive end that receives the target sensing signal.

Optionally, the first receiving module 701 is further configured to receive, from the second device, feedback configuration information corresponding to the target detection and measurement quantity, where
the feedback configuration information includes at least one of the following:
a time domain resource for reporting the target detection and measurement quantity;
a frequency domain resource for reporting the target detection and measurement quantity; and
a granularity or step for reporting the target detection and measurement quantity.

Optionally, the sensing signal detection apparatus 700 further includes:
a first sending module, configured to report the measurement information of the target detection and measurement quantity to a target device, where the target device is the second device or a third device associated with the second device.

Optionally, the measurement information of the target detection and measurement quantity includes at least one of the following:
first measurement information corresponding to at least one first detection and measurement quantity, where the first detection and measurement quantity is a detection and measurement quantity among the target detection and measurement quantities, and first measurement information corresponding to each first detection and measurement quantity includes at least one of the following: index values of M sensing signals, where the M sensing signals are all sensing signals corresponding to the first detection and measurement quantity, and M is an integer greater than 1; and a measurement value of a sensing signal corresponding to each index value; and
second measurement information corresponding to at least one second detection and measurement quantity, where the second detection and measurement quantity is a detection and measurement quantity among the target detection and measurement quantities, and second measurement information corresponding to each second detection and measurement quantity is associated with all sensing signals corresponding to the second detection and measurement quantity.

Optionally, the execution module 702 is further configured to: in a case that the detection window at least partially overlaps a resource corresponding to a preset signal or a preset event in time domain, cancel, by the first device, the detection and measurement of the sensing signal within the detection window.

Optionally, the sensing signal detection apparatus 700 further includes:
a first sending module, configured to send assistance information to the second device, where the assistance information is used to indicate target information, and the target information includes at least one of the following: an expected detection period, an expected detection offset, and expected detection duration.

Optionally, the sensing signal detection apparatus 700 further includes:
a first sending module, configured to report capability information to a target device, where the capability information is used to indicate at least one of the following:
detection periods and detection duration of different sensing signals;
detection periods and detection duration of different detection and measurement quantities corresponding to different sensing signals; and
detection periods and detection duration of different detection and measurement quantities corresponding to different sensing signals at different frequencies.

The sensing signal detection apparatus provided in this embodiment of this application is capable of implementing each process in the method embodiment in FIG. 4. To avoid repetition, details are not described herein again.

It should be noted that the sensing signal detection processing method provided in the embodiments of this application may be performed by a sensing signal detection processing apparatus, or a control module configured to perform the sensing signal detection processing method in the sensing signal detection processing apparatus. A sensing signal detection processing apparatus provided in the embodiments of this application is described by assuming that the sensing signal detection processing method in the embodiments of this application is performed by the sensing signal detection processing apparatus.

FIG. 8 is a structural diagram of a sensing signal detection processing apparatus according to an embodiment of this application. As shown in FIG. 8, the sensing signal detection processing apparatus 800 includes:
a second sending module 801, configured to send first indication information to a first device, where the first indication information is used to determine a detection window for detecting and measuring a target sensing signal.

Optionally, the second sending module 801 is further configured to send second indication information to the first device, where the second indication information is used to indicate the target sensing signal, where
the target sensing signal includes N types of sensing signals, and N is a positive integer.

Optionally, the second sending module 801 is further configured to send third indication information to the first device, where the third indication information is used to indicate configuration information of at least one type of sensing signal or configuration information of at least one resource for a type of sensing signal.

Optionally, the second sending module 801 is further configured to send fourth indication information to the first device, where the fourth indication information is used to indicate at least one of the following:
a power difference between sensing signals with different indexes;
a power difference between sensing signals on different resources; and
a quasi-co-location QCL relationship between sensing signals.

Optionally, the first indication information is used to indicate at least one of the following: a detection period, a detection offset, and detection duration.

Optionally, the sensing signal detection processing apparatus 800 further includes:
a second receiving module, configured to receive measurement information of a target detection and measurement quantity, where the target detection and measurement quantity includes at least one of the following detection and measurement quantities: a channel matrix, channel state information, reference signal received power, a received signal strength indicator, a channel power delay profile, a Doppler power spectrum, Doppler spread, a coherence bandwidth, a coherence time, power of at least one path in a multipath channel, a delay of the at least one path in the multipath channel, an angle of the at least one path in the multipath channel, a Doppler frequency shift, a quotient of frequency domain channel responses of a first antenna and a second antenna, a conjugate product of the frequency domain channel responses of the first antenna and the second antenna, an amplitude ratio of received signals of the first antenna and the second antenna, an amplitude difference between the received signals of the first antenna and the second antenna, a phase difference between the first antenna and the second antenna, and angle-related information of the first antenna and the second antenna, where
the first antenna and the second antenna are receive antennas of the first device.

Optionally, the second sending module 801 is further configured to send, to the first device, feedback configuration information corresponding to the target detection and measurement quantity, where
the feedback configuration information includes at least one of the following:
a time domain resource for reporting the target detection and measurement quantity;
a frequency domain resource for reporting the target detection and measurement quantity; and
a granularity or step for reporting the target detection and measurement quantity.

Optionally, the measurement information of the target detection and measurement quantity includes at least one of the following:
first measurement information corresponding to at least one first detection and measurement quantity, where the first detection and measurement quantity is a detection and measurement quantity among the target detection and measurement quantities, and first measurement information corresponding to each first detection and measurement quantity includes at least one of the following: index values of M sensing signals, where the M sensing signals are all sensing signals corresponding to the first detection and measurement quantity, and M is an integer greater than 1; and a measurement value of a sensing signal corresponding to each index value; and
second measurement information corresponding to at least one second detection and measurement quantity, where the second detection and measurement quantity is a detection and measurement quantity among the target detection and measurement quantities, and second measurement information corresponding to each second detection and measurement quantity is associated with all sensing signals corresponding to the second detection and measurement quantity.

Optionally, the second sending module 801 is further configured to forward the measurement information of the target detection and measurement quantity to a third device associated with the second device.

Optionally, the sensing signal detection processing apparatus 800 further includes:
a second receiving module, configured to receive assistance information from the first device, where the assistance information is used to indicate target information, and the target information includes at least one of the following: an expected detection period, an expected detection offset, and expected detection duration.

Optionally, the sensing signal detection processing apparatus 800 further includes:
a second receiving module, configured to receive capability information from the first device, where the capability information is used to indicate at least one of the following:
detection periods and detection duration of different sensing signals;
detection periods and detection duration of different detection and measurement quantities corresponding to different sensing signals; and
detection periods and detection duration of different detection and measurement quantities corresponding to different sensing signals at different frequencies.

The sensing signal detection processing apparatus provided in this embodiment of this application is capable of implementing each process in the method embodiment in FIG. 4. To avoid repetition, details are not described herein again.

The sensing signal detection apparatus and the sensing signal detection processing apparatus in the embodiments of this application may be apparatuses, or apparatuses or electronic devices with operating systems, or may be components, integrated circuits, or chips in terminals. The apparatuses may be mobile terminals, or may be nonmobile terminals. For example, a mobile terminal may include but is not limited to the foregoing illustrated type of the terminal 11. The nonmobile terminal may be a server, a network attached storage (Network Attached Storage, NAS), a personal computer (personal computer, PC), a television (television, TV), a teller machine, a self-service machine, or the like. This is not specifically limited in this embodiment of this application.

Optionally, as shown in FIG. 9, an embodiment of this application further provides a communication device 900, including a processor 901, a memory 902, and a program or instructions stored in the memory 902 and capable of running on the processor 901. When the program or instructions are executed by the processor 901, each process of the foregoing embodiment of the sensing signal detection method or the sensing signal detection processing method is implemented, with the same technical effect achieved. To avoid repetition, details are not described herein again.

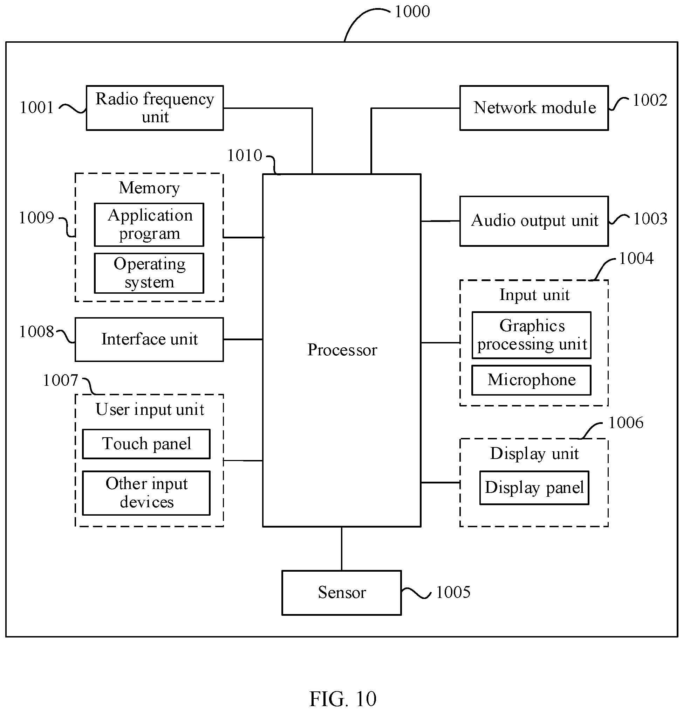

An embodiment of this application further provides a terminal, including a processor and a communication interface. The communication interface is configured to: receive first indication information from a second device, where the first indication information is used to determine a detection window; and detect and measure a target sensing signal based on the detection window; or the communication interface is configured to send first indication information to a first device, where the first indication information is used to determine a detection window for detecting and measuring a target sensing signal. The terminal embodiment corresponds to the foregoing terminal-side method embodiment, and each implementation process and implementation of the foregoing method embodiment can be applied to the terminal embodiment, with the same technical effect achieved. Specifically, FIG. 10 is a schematic diagram of a hardware structure of a terminal for implementing each embodiment of this application.

The terminal 1000 includes but is not limited to at least some components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that the terminal 1000 may further include a power supply (for example, a battery) supplying power to all components. The power supply may be logically connected to the processor 1010 through a power management system. In this way, functions such as charge management, discharge management, and power consumption management are implemented by using the power management system. The terminal structure shown in FIG. 10 does not constitute a limitation on the terminal. The terminal may include more or fewer components than those shown in the figure, or some components are combined, or component arrangements are different. Details are not described herein again.

It should be understood that, in this embodiment of this application, the input unit 1004 may include a graphics processing unit (Graphics Processing Unit, GPU) and a microphone. The graphics processing unit processes image data of a still picture or video obtained by an image capture apparatus (such as a camera) in a video capture mode or an image capture mode. The display unit 1006 may include a display panel, and the display panel may be configured in a form of a liquid crystal display, an organic light-emitting diode, or the like. The user input unit 1007 includes a touch panel and other input devices. The touch panel is also referred to as a touchscreen. The touch panel may include two parts: a touch detection apparatus and a touch controller. The other input devices may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 1001 sends the downlink data to the processor 1010 for processing, and in addition, sends uplink data to the network-side device. Generally, the radio frequency unit 1001 includes but is not limited to an antenna, at least one amplifier, a transceiver, a coupler, a low noise amplifier, a duplexer, and the like.

The memory 1009 may be configured to store software programs or instructions and various data. The memory 109 may primarily include a program or instruction storage area and a data storage area. The program or instruction storage area may store an operating system, an application program or instructions required by at least one function (such as an audio play function and an image play function), and the like. In addition, the memory 1009 may include a high-speed random access memory, and may further include a non-transitory memory. The non-transitory memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-transitory solid-state storage device.

The processor 1010 may include one or more processing units. Optionally, the processor 1010 may integrate an application processor and a modem processor. The application processor mainly processes the operating system, a user interface, an application program or an instruction, and the like. The modem processor mainly processes wireless communication. For example, the modem processor is a baseband processor. It may be understood that the modem processor may alternatively not be integrated in the processor 1010.

The radio frequency unit 1001 is configured to: receive first indication information from a second device, where the first indication information is used to determine a detection window; and detect and measure a target sensing signal based on the detection window; or
the radio frequency unit 1001 is configured to send first indication information to a first device, where the first indication information is used to determine a detection window for detecting and measuring a target sensing signal.

The terminal provided in this embodiment of this application can implement each process implemented by the method embodiments in FIG. 4 to FIG. 6, with the same technical effect achieved. To avoid repetition, details are not described herein again.

An embodiment of this application further provides a network-side device, including a processor and a communication interface. The communication interface is configured to: receive first indication information from a second device, where the first indication information is used to determine a detection window; and detect and measure a target sensing signal based on the detection window; or the communication interface is configured to send first indication information to a first device, where the first indication information is used to determine a detection window for detecting and measuring a target sensing signal. The network-side device embodiment corresponds to the foregoing method embodiment of the network-side device, and each implementation process and implementation of the foregoing method embodiment can be applied to the network-side device embodiment, with the same technical effect achieved.

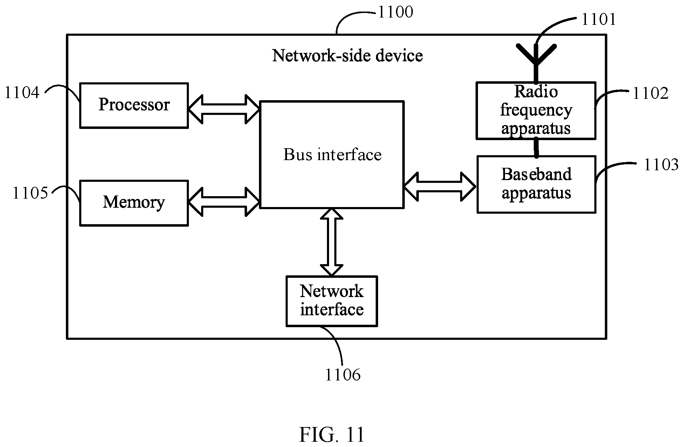

Specifically, an embodiment of this application further provides a network-side device. As shown in FIG. 11, the network-side device 1100 includes an antenna 1101, a radio frequency apparatus 1102, and a baseband apparatus 1103. The antenna 1101 is connected to the radio frequency apparatus 1102. In an uplink direction, the radio frequency apparatus 1102 receives information by using the antenna 1101, and sends the received information to the baseband apparatus 1103 for processing. In a downlink direction, the baseband apparatus 1103 processes to-be-sent information, and sends the information to the radio frequency apparatus 1102; and the radio frequency apparatus 1102 processes the received information and then sends the information out by using the antenna 1101.

The frequency band processing apparatus may be located in the baseband apparatus 1103. The method performed by the network-side device in the foregoing embodiment may be implemented in the baseband apparatus 1103, and the baseband apparatus 1103 includes a processor 1104 and a memory 1105.

The baseband apparatus 1103 may include, for example, at least one baseband unit, where a plurality of chips are disposed on the baseband unit. As shown in FIG. 11, one of the chips is, for example, the processor 1104, connected to the memory 1105, to invoke a program in the memory 1105 to perform the operation of the network-side device shown in the foregoing method embodiment.

The baseband apparatus 1103 may further include a network interface 1106, configured to exchange information with the radio frequency apparatus 1102, where the interface is, for example, a common public radio interface (common public radio interface, CPRI).

Specifically, the network-side device in this embodiment of this application further includes a program or instructions stored in the memory 1105 and capable of running on the processor 1104. When the processor 1104 invokes the program or instructions in the memory 1105, the method performed by each module shown in FIG. 7 or FIG. 8 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing embodiment of the sensing signal detection method or the sensing signal detection processing method is implemented, with the same technical effect achieved. To avoid repetition, details are not described herein again.

The processor is a processor in the electronic device in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the sensing signal detection method or the sensing signal detection processing method, with the same technical effect achieved. To avoid repetition, details are not described herein again.

It should be understood that the chip provided in this embodiment of this application may also be referred to as a system-level chip, a system chip, a chip system, a system-on-chip, or the like.

An embodiment of this application provides a computer program product. The computer program product is stored in a non-transitory storage medium. The computer program product is executed by at least one processor to implement each process of the foregoing embodiment of the sensing signal detection method or the sensing signal detection processing method, with the same technical effect achieved. To avoid repetition, details are not described herein again.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a base station, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A sensing signal detection method, comprising:
receiving, by a first device, first indication information from a second device, wherein the first indication information is used to determine a detection window; and
detecting and measuring, by the first device, a target sensing signal based on the detection window.

2. The method according to claim 1, wherein the method further comprises:
receiving, by the first device, second indication information from the second device, wherein the second indication information is used to indicate the target sensing signal, wherein
the target sensing signal comprises N types of sensing signals, and N is a positive integer.

3. The method according to claim 1, wherein before the receiving, by a first device, first indication information from a second device, the method further comprises:
receiving, by the first device, third indication information from the second device, wherein the third indication information is used to indicate configuration information of at least one type of sensing signal or configuration information of at least one resource for a type of sensing signal.

4. The method according to claim 1, wherein the method further comprises:
receiving, by the first device, fourth indication information from the second device, wherein the fourth indication information is used to indicate at least one of the following:
a power difference between sensing signals with different indexes;
a power difference between sensing signals on different resources; and
a quasi-co-location QCL relationship between sensing signals.

5. The method according to claim 1, wherein the first indication information is used to indicate at least one of the following: a detection period, a detection offset, and detection duration.

6. The method according to claim 1, wherein after the detecting and measuring, by the first device, a target sensing signal based on the detection window, the method further comprises:
reporting, by the first device, measurement information of a target detection and measurement quantity, wherein the target detection and measurement quantity comprises at least one of the following detection and measurement quantities: a channel matrix, channel state information, reference signal received power, a received signal strength indicator, a channel power delay profile, a Doppler power spectrum, Doppler spread, a coherence bandwidth, a coherence time, power of at least one path in a multipath channel, a delay of the at least one path in the multipath channel, an angle of the at least one path in the multipath channel, a Doppler frequency shift, a quotient of frequency domain channel responses of a first antenna and a second antenna, a conjugate product of the frequency domain channel responses of the first antenna and the second antenna, an amplitude ratio of received signals of the first antenna and the second antenna, an amplitude difference between the received signals of the first antenna and the second antenna, a phase difference between the first antenna and the second antenna, and angle-related information of the first antenna and the second antenna, wherein
the first antenna and the second antenna are receive antennas of the first device.

7. The method according to claim 6, wherein the method further comprises:
receiving, by the first device from the second device, feedback configuration information corresponding to the target detection and measurement quantity, wherein
the feedback configuration information comprises at least one of the following:
a time domain resource for reporting the target detection and measurement quantity;
a frequency domain resource for reporting the target detection and measurement quantity; and
a granularity or step for reporting the target detection and measurement quantity.

8. The method according to claim 6, wherein the reporting, by the first device, measurement information of a target detection and measurement quantity comprises:
reporting, by the first device, the measurement information of the target detection and measurement quantity to a target device, wherein the target device is the second device or a third device associated with the second device.

9. The method according to claim 6, wherein the measurement information of the target detection and measurement quantity comprises at least one of the following:
first measurement information corresponding to at least one first detection and measurement quantity, wherein the first detection and measurement quantity is a detection and measurement quantity among the target detection and measurement quantities, and first measurement information corresponding to each first detection and measurement quantity comprises at least one of the following: index values of M sensing signals, wherein the M sensing signals are all sensing signals corresponding to the first detection and measurement quantity, and M is an integer greater than 1; and a measurement value of a sensing signal corresponding to each index value; and
second measurement information corresponding to at least one second detection and measurement quantity, wherein the second detection and measurement quantity is a detection and measurement quantity among the target detection and measurement quantities, and second measurement information corresponding to each second detection and measurement quantity is associated with all sensing signals corresponding to the second detection and measurement quantity.

10. The method according to claim 1, wherein the method further comprises:
in a case that the detection window at least partially overlaps a resource corresponding to a preset signal or a preset event in time domain, canceling, by the first device, the detection and measurement of the sensing signal within the detection window.

11. The method according to claim 1, wherein the method further comprises:
sending, by the first device, assistance information to the second device, wherein the assistance information is used to indicate target information, and the target information comprises at least one of the following: an expected detection period, an expected detection offset, and expected detection duration.

12. The method according to claim 1, wherein the method further comprises:
reporting, by the first device, capability information to a target device, wherein the capability information is used to indicate at least one of the following:
detection periods and detection duration of different sensing signals;
detection periods and detection duration of different detection and measurement quantities corresponding to different sensing signals; and
detection periods and detection duration of different detection and measurement quantities corresponding to different sensing signals at different frequencies.

13. A sensing signal detection processing method, comprising:
sending, by a second device, first indication information to a first device, wherein the first indication information is used to determine a detection window for detecting and measuring a target sensing signal.

14. The method according to claim 13, wherein the method further comprises:
sending, by the second device, second indication information to the first device, wherein the second indication information is used to indicate the target sensing signal, wherein
the target sensing signal comprises N types of sensing signals, and N is a positive integer.

15. The method according to claim 13, wherein before the sending, by a second device, first indication information to a first device, the method further comprises:
sending, by the second device, third indication information to the first device, wherein the third indication information is used to indicate configuration information of at least one type of sensing signal or configuration information of at least one resource for a type of sensing signal.

16. The method according to claim 13, wherein the method further comprises:
sending, by the second device, fourth indication information to the first device, wherein the fourth indication information is used to indicate at least one of the following:
a power difference between sensing signals with different indexes;
a power difference between sensing signals on different resources; and
a quasi-co-location QCL relationship between sensing signals.

17. The method according to claim 13, wherein the first indication information is used to indicate at least one of the following: a detection period, a detection offset, and detection duration.

18. The method according to claim 13, wherein after the sending, by a second device, first indication information to a first device, the method further comprises:
receiving, by the second device, measurement information of a target detection and measurement quantity, wherein the target detection and measurement quantity comprises at least one of the following detection and measurement quantities: a channel matrix, channel state information, reference signal received power, a received signal strength indicator, a channel power delay profile, a Doppler power spectrum, Doppler spread, a coherence bandwidth, a coherence time, power of at least one path in a multipath channel, a delay of the at least one path in the multipath channel, an angle of the at least one path in the multipath channel, a Doppler frequency shift, a quotient of frequency domain channel responses of a first antenna and a second antenna, a conjugate product of the frequency domain channel responses of the first antenna and the second antenna, an amplitude ratio of received signals of the first antenna and the second antenna, an amplitude difference between the received signals of the first antenna and the second antenna, a phase difference between the first antenna and the second antenna, and angle-related information of the first antenna and the second antenna, wherein
the first antenna and the second antenna are receive antennas of the first device.

19. The method according to claim 18, wherein the method further comprises:
sending, by the second device to the first device, feedback configuration information corresponding to the target detection and measurement quantity, wherein
the feedback configuration information comprises at least one of the following:
a time domain resource for reporting the target detection and measurement quantity;
a frequency domain resource for reporting the target detection and measurement quantity; and
a granularity or step for reporting the target detection and measurement quantity.

20. The method according to claim 18, wherein the measurement information of the target detection and measurement quantity comprises at least one of the following:
first measurement information corresponding to at least one first detection and measurement quantity, wherein the first detection and measurement quantity is a detection and measurement quantity among the target detection and measurement quantities, and first measurement information corresponding to each first detection and measurement quantity comprises at least one of the following: index values of M sensing signals, wherein the M sensing signals are all sensing signals corresponding to the first detection and measurement quantity, and M is an integer greater than 1; and a measurement value of a sensing signal corresponding to each index value; and
second measurement information corresponding to at least one second detection and measurement quantity, wherein the second detection and measurement quantity is a detection and measurement quantity among the target detection and measurement quantities, and second measurement information corresponding to each second detection and measurement quantity is associated with all sensing signals corresponding to the second detection and measurement quantity.

21. The method according to claim 18, wherein after the receiving, by the second device, measurement information of a target detection and measurement quantity, the method further comprises:
forwarding, by the second device, the measurement information of the target detection and measurement quantity to a third device associated with the second device.

22. The method according to claim 13, wherein the method further comprises:
receiving, by the second device, assistance information from the first device, wherein the assistance information is used to indicate target information, and the target information comprises at least one of the following: an expected detection period, an expected detection offset, and expected detection duration.

23. The method according to claim 13, wherein the method further comprises:
receiving, by the second device, capability information from the first device, wherein the capability information is used to indicate at least one of the following:
detection periods and detection duration of different sensing signals;
detection periods and detection duration of different detection and measurement quantities corresponding to different sensing signals; and
detection periods and detection duration of different detection and measurement quantities corresponding to different sensing signals at different frequencies.

24. A sensing signal detection apparatus, comprising:
a first receiving module, configured to receive first indication information from a second device, wherein the first indication information is used to determine a detection window; and
an execution module, configured to detect and measure a target sensing signal based on the detection window.

25. The apparatus according to claim 24, wherein the first receiving module is further configured to receive third indication information from the second device, wherein the third indication information is used to indicate configuration information of at least one type of sensing signal or configuration information of at least one resource for a type of sensing signal.

26. The apparatus according to claim 24, wherein the sensing signal detection apparatus further comprises:
a first sending module, configured to report measurement information of a target detection and measurement quantity, wherein the target detection and measurement quantity comprises at least one of the following detection and measurement quantities:
a channel matrix, channel state information, reference signal received power, a received signal strength indicator, a channel power delay profile, a Doppler power spectrum, Doppler spread, a coherence bandwidth, a coherence time, power of at least one path in a multipath channel, a delay of the at least one path in the multipath channel, an angle of the at least one path in the multipath channel, a Doppler frequency shift, a quotient of frequency domain channel responses of a first antenna and a second antenna, a conjugate product of the frequency domain channel responses of the first antenna and the second antenna, an amplitude ratio of received signals of the first antenna and the second antenna, an amplitude difference between the received signals of the first antenna and the second antenna, a phase difference between the first antenna and the second antenna, and angle-related information of the first antenna and the second antenna, wherein
the first antenna and the second antenna are receive antennas at a receive end that receives the target sensing signal.

27. A sensing signal detection processing apparatus, comprising:
a second sending module, configured to send first indication information to a first device, wherein the first indication information is used to determine a detection window for detecting and measuring a target sensing signal.

28. The apparatus according to claim 27, wherein the second sending module is further configured to send third indication information to the first device, wherein the third indication information is used to indicate configuration information of at least one type of sensing signal or configuration information of at least one resource for a type of sensing signal.

29. A terminal, comprising a memory, a processor, and a program stored in the memory and capable of running on the processor, wherein when the program is executed by the processor, the steps of the sensing signal detection method according to any one of claims 1 to 12 are implemented, or when the program is executed by the processor, the steps of the sensing signal detection processing method according to any one of claims 13 to 23 are implemented.

30. A network-side device, comprising a memory, a processor, and a program or instructions stored in the memory and capable of running on the processor, wherein when the program is executed by the processor, the steps of the sensing signal detection method according to any one of claims 1 to 12 are implemented, or when the program or instructions are executed by the processor, the steps of the sensing signal detection processing method according to any one of claims 13 to 23 are implemented.

31. A readable storage medium, wherein the readable storage medium stores a program or instructions, and when the program is executed by a processor, the steps of the sensing signal detection method according to any one of claims 1 to 12 are implemented, or when the program or instructions are executed by a processor, the steps of the sensing signal detection processing method according to any one of claims 13 to 23 are implemented.
